# EUROPEAN PATENT SPECIFICATION

(11) **EP 4 031 469 B1**
(45) Date of publication and mention of the grant of the patent: **01.11.2023**
(21) Application number: 20772131.7
(22) Date of filing: 11.09.2020
(51) Int. Cl.: B65D 85/804, A47J 31/34, A47J 31/36

(54) **IMPROVED CAPSULE FOR THE INFUSION OF DRINKS**
VERBESSERTE KAPSEL FÜR DIE INFUSION VON GETRÄNKEN
CAPSULE AMÉLIORÉE POUR L'INFUSION DE BOISSONS

(30) Priority: 18.09.2019 IT 201900016610
(43) Date of publication of application: 27.07.2022
(73) Proprietor: Petrini, Angelo, 63813 Monte Urano (FM) (IT); Tosti, Antonio, 02100 Rieti (IT)
(72) Inventor: Petrini, Angelo, 63813 Monte Urano (FM) (IT); Tosti, Antonio, 02100 Rieti (IT)
(74) Representative: Dall'Olio, Christian
(86) International application number: PCT/IB2020/058443
(87) International publication number: WO 2021/053475

(56) References cited:
- EP-A1- 1 658 795
- IT-A1- AN20 100 132
- IT-A1- AN20 100 142

## Description

### BACKGROUND OF THE INVENTION.

The present invention takes shape in the context of devices that enable the preparation of drinks by means of infusion of liquids, both hot and cold. This perfection, according to the idea of the invention, is related to the capsule containing the substance to be infused, as well as the machine that enables the dispensing of the drink.

### STATE OF THE ART

The preparation of instant drinks by infusion of water (or other liquid substances) inside capsules containing coffee, tea or edible mixtures in general, is a technique well known at the state of the art. The machines that dispense such drinks are fitted with an opening through which the capsule for the infusion is inserted into them. A liquid, mainly water at high temperature, is injected with adequate pressure into the said capsule; this is made possible by opportune openings present on the body of the capsule. The infusion that comes out of it is collected in a recipient.

Improvements of this technique have involved, for example, the systems for heating the liquid, today consisting of microwave or electromagnetic induction devices, with greater practicality and efficiency. A further evolution is also that illustrated in the patent application IT-AN2010A000142, in which the capsule contains also the liquid for the infusion, a liquid therefore no longer present inside the boiler of the dispensing machine.

The patent application IT-AN2010A000142 shows an arrangement with the infusion liquid in a sealed compartment connected to the capsule. This solution presents a great advantage from a hygienic point of view, because the liquid is protected against any possible contamination.

This solution, however, presents technical limits which it is difficult to overcome. The first consists of the mechanical action necessary to push the water contained in the upper section of the capsule, towards the lower one containing the mixture for the infusion (coffee, tea etc.) from which the infusion is generated.

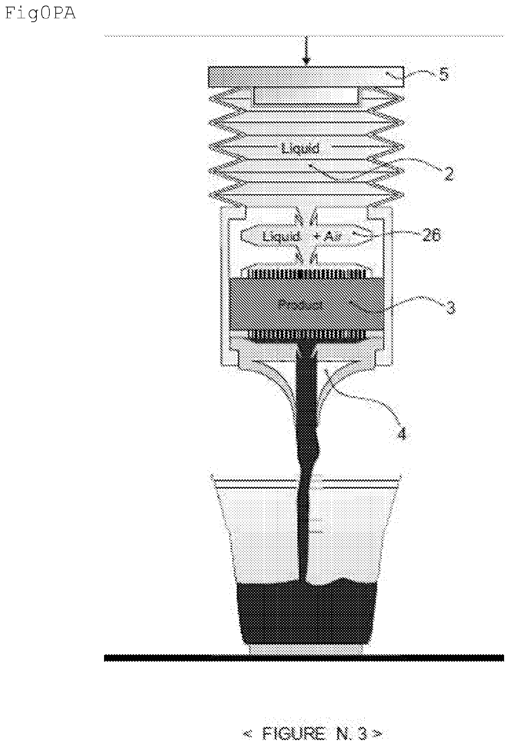

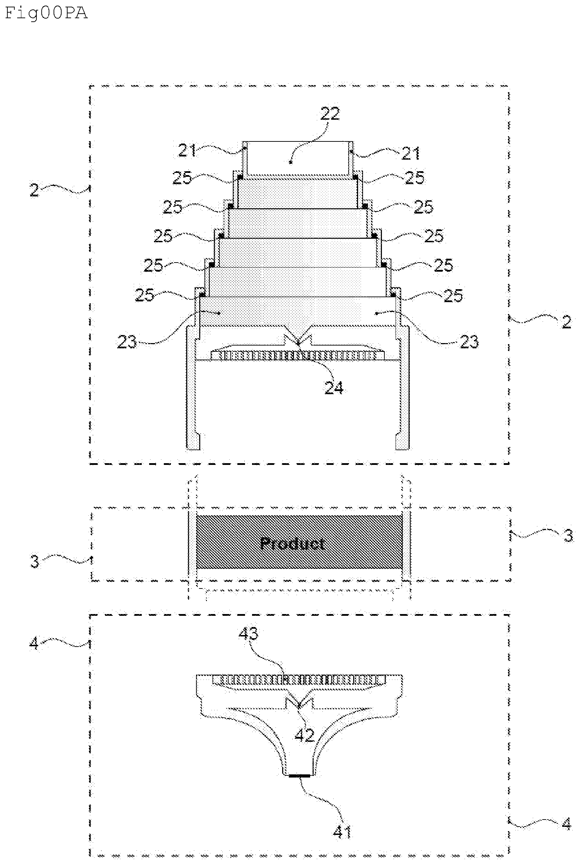

In patent application IT-AN2010A000142, in fact, the dispensing machine is fitted with a mechanical system, of the piston type, which produces this pressure on the capsule [Prior Art IT-AN2010A000142 - Fig0PA(5)]. It is evident that this entails a complication in the construction of the dispensing device, which must be fitted with servomotors an/or lubricated mechanical levers.

A further complication is the presence, in the capsule, of the container of the liquid, which must guarantee a perfect hermetic seal but at the same time be flexible when subjected to the mechanical pressure necessary to produce the infusion.

Similar solutions such as those proposed in the patent application IT-AN2010A000132 are also difficult to implement, because they need a high degree of mechanical accuracy in the creation of the capsule, that is a level of precision in the couplings between the mobile parts and the fixed ones such as to prevent the liquid contained in it from leaking out during the compression operation performed by the dispensing machine [Prior Art IT-AN2010A000132 - Fig00PA(25)] .

There is the same problem also in the patent application IT-AN2010A000178 in which a movable element is present inside the capsule, which subjected to pressure, pushes the liquid into the chamber containing the mixture for the infusion.

The purpose of the improvement according to the idea of the invention, is therefore to overcome the above problems and to simplify construction of both the capsule for the infusion, and the dispensing machine, keeping all the advantages acquired up to now by the state of the art.

### SUMMARY OF THE INVENTION.

The table of Drawings shows in detail the characteristics of the invention; specifically:
- Fig 1 shows the set of the parts that make up the capsule for the infusion according to the idea of the invention.
- Fig 2 shows the mechanical action of the air injected into the capsule according to the idea of the invention.
- Fig 3 shows the separation of the capsule into two distinct parts according to the idea of the invention for the purpose of improve the quality of separate collection.
- Fig 4 shows a detail of the mechanical hooking between the upper and the lower section of the capsule according to the idea of the invention.
- Fig 5 shows the presence of a unique identification and/or memory system on the capsule according to the idea of the invention.
- Fig 6 shows the presence of several sections containing the mixture for the infusion.
- Fig 7 shows a dispensing machine developed for the use of the capsule according to the idea of the invention.
- Fig 8 shows the sachet containing the liquid of the infusion inside the upper section of the capsule according to the idea of the invention.
- Fig 9 shows the liquid that has come out of the sachet inside the upper section of the capsule according to the idea of the invention.
- Fig 10 shows the detail of the injector jet and its parts.

### DESCRIPTION OF THE INVENTION.

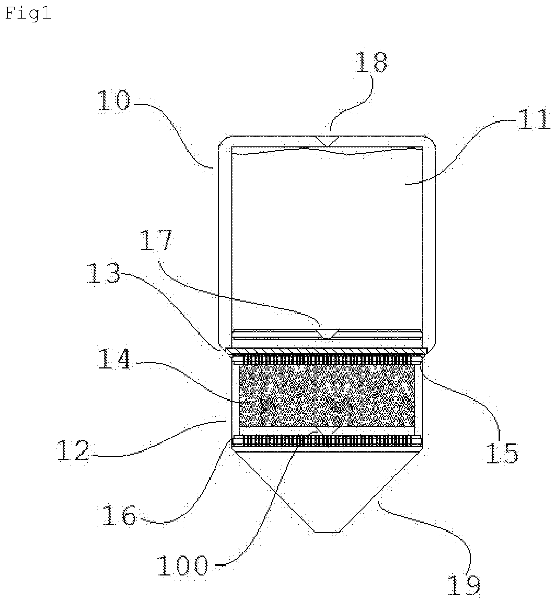

The invention takes shape in the capsule of [Fig 1] in which the upper body of the capsule [Fig1(10)] is made of an adequate material (for example: of plastic and recyclable type) with adequate rigidity and impermeability to contain securely inside it the liquid for the infusion [Fig 1(11)]. The lower part [Fig 1 (12)] is instead made of a preferably compostable material and linked to the upper part by means of a mechanical hook [Fig 1 (13)]. The mixture for the infusion, for example coffee, tea or other similar drink, is contained inside it [Fig 1(14)]. Two openings fitted with filters/diffusers [Fig 1(15) (16)] enable the passage of the infusion liquid from the top to the bottom. The capsule according to the idea of the invention is fitted at the bottom with a section that functions as a funnel [Fig 1(19)] designed to collect the infusion in a container below. The infusion liquid, present in the capsule in the upper section, is kept inside it thanks to the mechanical retention valves, a lower one with programmed breakage [Fig 1 (17)] and an upper one [Fig 1 (18)]. A further mechanical retention valve with programmed breakage is present in the lower section containing the mixture for the infusion, beneath the lower diffuser filter [Fig 1 (100)].

According to the idea of the invention, the procedure that enables the infusion liquid to descend towards the container of the mixture placed below it, is based on the injection of compressed air through the upper mechanical retention valve. This solution does not imply the movement inside the capsule of pistons, partitions and/or sealing elements between infusion liquid and mixture. This is to be considered of fundamental importance, because all capsules for infusion of drinks, generally, are subjected to a high mechanical and thermal shock, due to the passage of the liquid at high temperature (water, milk etc.) This causes an expansion of the materials of which the capsule is made and a malfunctioning of the device.

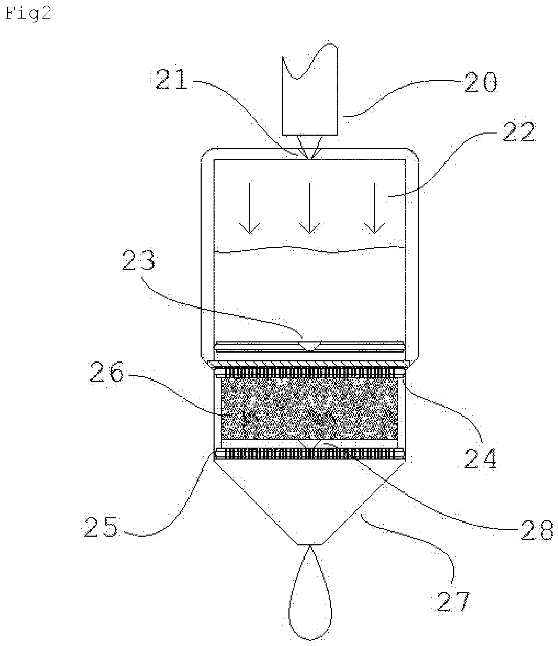

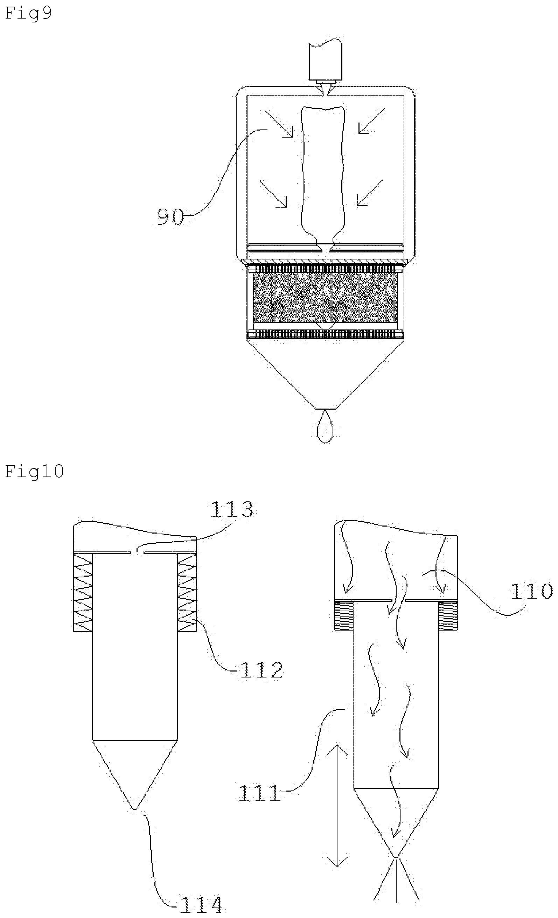

According to the idea of the invention, a perforating injector jet [Fig 2(20)] [Fig 10(110) (111)] moved by compressed air and present in the dispensing machine, perforates the upper mechanical retention valve [Fig 2(21)] and therefore pushes the air inside it [Fig 2(22)]. The increase in pressure causes the lower mechanical retention valve with programmed breakage to break [Fig 2(23)] and the liquid descends, through the upper filter/diffuser [Fig 2(24] into the section containing the infusion mixture [Fig 2(26)]. At this point the liquid wets the infusion mixture but does not drip immediately towards the external funnel [Fig 2(27)], because the programmed breakage of the last mechanical retention valve [Fig 2(28)] is calibrated at a higher pressure than the upper one. This makes it possible to carry out the practice called pre-infusion, typically used for example in the preparation of coffee, to obtain a drink of higher quality. When the pressure reaches a pre-set value, the mechanical retention valve with programmed breakage of the lower section also breaks [Fig 2(28)], and the infusion liquid, after going through the lower filter/diffuser [Fig2(25)] drips out and is collected in the funnel beneath [Fig2(27)].

According to the idea of the invention, once the capsule in the dispensing machine has been used, it is possible to separate the units that make up the said capsule into two distinct parts, for the purpose of improving the quality of separate collection, recycling and the environmental sustainability of the device resulting from the idea of the invention.

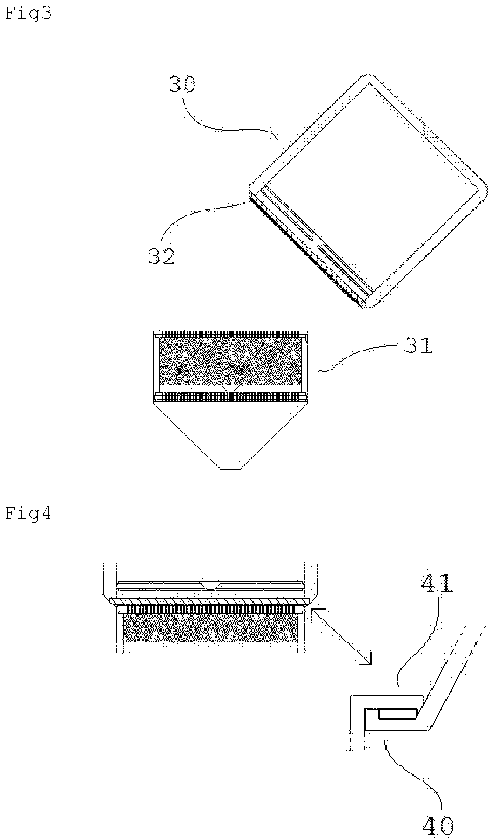

By means of a specific hook of a mechanical type [Fig 3(32)] the upper part of the capsule used to contain the liquid for the infusion [Fig 3(30)] is in fact firmly connected to the lower part containing the mixture for the infusion, the diffuser filters and the funnel [Fig 3(31)].

According to the idea of the invention, exercising due traction, the components of the mechanical hook [Fig 4 (40)(41)] are separated from each other and the seal of the two parts is broken. This enables the separation of the capsule into two distinct containers. The joint between the two parts making up the capsule may also be made by ultrasound welding. Another variant is that of joining the upper section and the lower one of the capsule according to the idea of the invention by means of a screw connection.

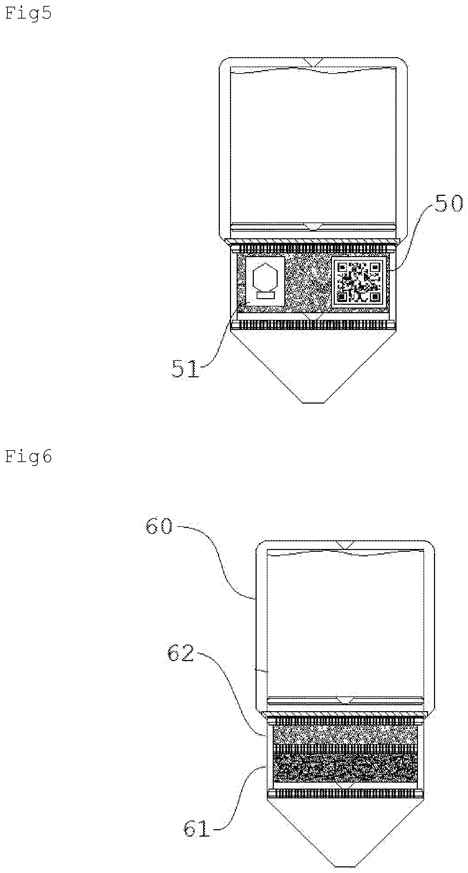

According to the idea of the invention, the capsule is fitted with a unique identification system, such as a RFID or QRCODE chip [Fig 5(50)(51)] which contains all the data related to the technical characteristics and to those of the edible product contained inside it. These data are conveniently read by the dispensing machine and enable the same to perform the safety checks, as well as ancillary functions useful for the correct dispensing of the edible product. For example: if the capsule contains an expired product for infusion, the dispensing machine will block the infusion and inform the user with an audio/visual message; or it is possible to add to the unique identification system the information on the recommended speed of infusion and/or pre-infusion of the liquid and its ideal temperature for obtaining the maximum possible quality of the product to be drunk.

According to the idea of the invention, further construction forms of the capsule can be created, adding further sections containing the liquid for the infusion and the mixture for the infusion. For example: two adjacent sections can be present with the different types of mixtures for the infusion and a single section with the liquid to be infused; or two sections with different types of liquid to be infused and a single section with the mixture for the infusion. This comes to depend strictly on the drink to be generated and on the most opportune practices to be carried out in order to obtain the best possible quality of the product. In Fig 6 for example you can see a double chamber for the mixture of the infusion [Fig 6(61)(62)] and a single one for the liquid of the infusion [Fig 6(60)].

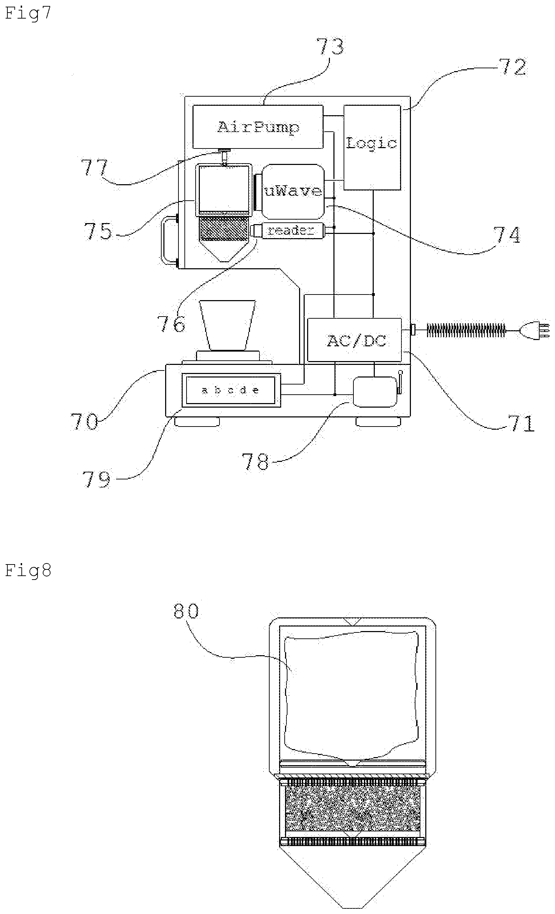

According to the idea of the invention a further layout of the section containing the infusion liquid is possible. This layout involves there being, inside this section, a soft sachet in recyclable material [Fig 8(80)], which in turn contains liquid to be infused. The sachet is in communication with the lower mechanical retention valve with programmed breakage. The action of the compressed air inside the upper section of the capsule, leads to the compression of the surfaces of the sachet [Fig 9(90)] and the liquid inside it, once the lower mechanical retention valve has broken, penetrates, through the diffuser filter, towards the mixture for the infusion. This layout could be advantageous in providing a greater degree of protection against external agents, in relation to the liquid for infusion contained in the capsule.

The dispensing machine, capable of using the capsule resulting from the idea of the invention, is notably simplified with respect to the state of the art of machines for producing drinks by infusion and, at the same time, is simplified in relation to the prior art cited IT-AN2010A000142, IT-AN2010A000132 and IT-AN2010A000178.

This is evident from Fig 7: the dispensing machine resulting from the idea of the invention [Fig 7(70)] is in fact fitted with a feeder section, for example of the AC/DC type [Fig 7(71)] which supplies the electric power to an operating logic [Fig 7(72)], to an air pump with a perforating injector jet [Fig 7(73)] and to the device that heats the liquid contained in the capsule, for example of the microwave type [Fig 7(74)]. A QRCODE and/or RFID reading/communication device is also present [Fig 7(76)]. Conveniently there is a display for service messages and/or alarms [Fig 7(79)] also of the touch for data entry type, and also a system of communication with the Internet, including of the wireless type [Fig 7(78)].

The capsule [Fig 7(75)] is positioned by the user in its seat, specially designed so that the upper mechanical retention valve of the capsule [Fig 2(21)] is aligned with the perforating injector jet placed on the air pump [Fig 7(77)]. The action of the compressed air [Fig 10(110)] is used to move the injector jet downwards [Fig 10(111)] and therefore to permit the perforation of the first mechanical retention valve placed at the top, in the section of the capsule containing the liquid to be infused. The injector jet is made up of two concentric cylindrical elements, movable along the respective horizontal axes, watertight, in which the reciprocal position is established by two mechanical retention springs [Fig 10 (112)]. When the compressed air flows inside them, the passages with reduced section present in the internal cylindrical element [Fig 10 (113)] create a force that moves this element with respect to the external one. This element has at its end a point [Fig 10(114)] which permits the perforation of the mechanical retention valve of the capsule according to the idea of the invention.

As can be seen from the blocks of Fig 7, there are no boilers inside the dispensing machine, and in addition no electrical servomotors and/or levers in movement are used to extract the liquid from the capsule resulting from the idea of the invention, as instead occurs in the prior art of IT-AN2010A000142, IT-AN2010A000132 and IT-AN2010A000178. The movement of the injector jet, therefore, is also itself given by the action of the compressed air and not by the use of electric servomotors.

This entails less use of components, a reduction in the volume, in general, and a lower weight of the dispensing machine according to the idea of the invention.

### ADVANTAGES OF THE INVENTION.

The advantages obtained from the solutions proposed by the invention are the following.
1. The capsule does not contain within it mechanical elements in movement together with watertight systems for the liquid of the infusion.
2. The liquid for the infusion can never arrive accidentally, without the action of the dispensing machine, inside the section containing the mixture for the infusion, because the seal is guaranteed by a mechanical retention valve with programmed breakage.
3. The capsule resulting from the idea of the invention consists of two parts separable by means of a mechanical action, capable of being easily recycled and/or disposed of to the great advantage of the environmental sustainability of the product.
4. The capsule resulting from the idea of the invention, thanks to the use of mechanical retention valves with breakage at differentiated pressure, enables the technique of pre-infusion.
5. The dispensing machine for the capsule resulting from the idea of the invention does not have inside it mechanical elements in movement, such as pistons or levers, necessary to push the liquid from the upper section of the capsule to the lower one.
6. The perforating action of the injector jet is commanded only by the force of compressed air, with no use of electric servomotors.
7. The parts that make up the dispensing machine for the capsule resulting from the idea of the invention are less than those present in the machines of the state of the art.
8. The parts that make up the dispensing machine for the capsule resulting from the idea of the invention occupy less volume than those present in the machines of the state of the art.

### DOCUMENTS OF REFERENCE.

IT-AN2010A000142
IT-AN2010A000132
IT-AN2010A000178

## Claims

1. Dispensing machines capsule for infusion beverage, composed by a watertight box divided into one or more upper sections containing liquid [Fig1(10)] one or more lower sections containing infusion mixture [Fig1(12)] and a spout placed into the base of the lowersection containing the infusion mixture [Fig1(19)], wherein:
- the section containing the liquid and the section containing the infusion mixture are mutually joined by a mechanical watertight connection [Fig4] or ultrasonic weld;
- the section containing the liquid is equipped with a mechanical seal valve with programmed breakage placed on the lower side [Fig1(17)], connected with the section containing the infusion mixture;
- the section containing the infusion mixture is equipped with a diffuser filter placed on the upper side [Fig1(15)] communicating with the section containing the liquid for infusion, a diffuser filter placed on the lower side [Fig1(16)] and a lower mechanical seal valve with programmed breakage [Fig1(100)] communicating with the spout;
- **characterized in that**:
the section containing the liquid is equipped with a mechanical seal valve placed on the upper side [Fig1(18)]; the mechanical seal valve with programmed breakage placed on infusion mixture section [Fig1(100)] has an opening threshold higher than the threshold of mechanical seal valve with programmed breakage placed into the upper section containing the infusion liquid[Fig1(17)].

2. Capsule according to Claim 1 wherein the mechanical joint between the section containing the infusion liquid and the section containing the infusion mixture is obtained bya screw connection.

3. Capsule according to Claim 1 in which the infusion liquid in the upper section is contained in a watertight bag [Fig8(80)], made of recyclable or biodegradable material, communicating with the mechanical seal valve with programmed breakage placed on the lower side.

4. Capsule according to Claim 1 equipped with a RFID communication interface.

5. Capsule according to Claim 1 equipped with a QRCODE.

6. Capsule according to Claim 1 wherein the section containing the infusion liquid and the mechanical seal valves are made of recyclable material.

7. Capsule according to Claim 1 wherein the section containing the infusion mixture, the diffuser filters and the spout are made of biodegradable materials.

8. Dispensing machine for the capsule of Claim 1 made of a power supply section [Fig7(71)], a logic control with a management and communication software [Fig7(72)], a microwave heating system and/or electric heater and/or magnetic induction heater [Fig7(74)], an air pump [Fig7(73)] equipped with a piercing nozzle [Fig7(77)], a QRCODE reader and/or RFID communication system [Fig7(76)], a touch command entry display [Fig7(79)] a network communication system, also wireless type [Fig7(78)];
and the dispensing machine comprises a seat specially designed so that the upper mechanical retention valve of the capsule [Fig 2(21)] is aligned with the perforating injector jet placed on the air pump [Fig 7(77)].

9. Dispensing machine according to Claim 8 equipped with a software able to read and manage the parameters saved in the QRCODE and/or in the RFID chip of the capsule.

10. Dispensing machine according to Claim 8 wherein data read by the QRCODE and/or by RFID chip regarding the recommended temperature of the infusion liquid and the infusion rate, are editable by the user.

11. Dispensing machine according to Claim 8 wherein the piercing nozzle consist by two empty and concentric cylindrical elements,with airtight feature, movable long its axis [Fig10 (111)], bond to two mechanical retention spring [Fig10(112)], provided with an internal airflow aperture with reduced section [Fig10(113)] wherein the internal cylindrical element is equipped with a piercing tip [Fig10(14).

## Patentansprüche

1. Kapsel für Ausgabemaschinen für Aufgussgetränke, bestehend aus einem wasserdichten Behältnis, das unterteilt ist in einen oder mehrere Flüssigkeit enthaltende obere Abschnitte [Fig1(10)], einen oder mehrere Aufgussmischung enthaltende untere Abschnitte [Fig1(12)] und eine an der Unterseite des die Aufgussmischung enthaltenden unteren Abschnitts angeordnete Ausgusstülle [Fig1(19)], wobei:
- der die Flüssigkeit enthaltende Abschnitt und der die Aufgussmischung enthaltende Abschnitt über eine mechanische wasserdichte Verbindung [Fig4] oder Ultraschallschweißung miteinander verbunden sind,
- der die Flüssigkeit enthaltende Abschnitt mit einem auf der unteren Seite angeordneten mechanischen Rückhalteventil mit geplantem Bruch [Fig1(17)] ausgestattet ist, das mit dem die Aufgussmischung enthaltenden Abschnitt in Verbindung steht,
- der die Aufgussmischung enthaltende Abschnitt mit einem Diffusorfilter, der auf der oberen Seite [Fig1(15)] angeordnet ist und mit dem die Flüssigkeit für den Aufguss enthaltenden Abschnitt in Verbindung steht, mit einem Diffusorfilter, der auf der unteren Seite [Fig1(16)] angeordnet ist, und mit einem unteren mechanischen Rückhalteventil mit geplantem Bruch [Fig1(100)], das mit der Ausgusstülle in Verbindung steht, ausgestattet ist,
- **dadurch gekennzeichnet, dass**:
der die Flüssigkeit enthaltende Abschnitt mit einem auf der oberen Seite angeordneten mechanischen Rückhalteventil [Fig1(18)] ausgestattet ist, das auf dem die Aufgussmischung enthaltenden Abschnitt angeordnete mechanische Rückhalteventil mit geplantem Bruch [Fig1(100)] eine Öffnungsschwelle aufweist, die höher ist als die Schwelle des in dem die Aufgussflüssigkeit enthaltenden oberen Abschnitt angeordneten mechanischen Rückhalteventils mit geplantem Bruch [Fig1(17)].

2. Kapsel nach Anspruch 1, wobei die mechanische Verbindung zwischen dem die Aufgussflüssigkeit enthaltenden Abschnitt und dem die Aufgussmischung enthaltenden Abschnitt durch eine Schraubverbindung erhalten wird.

3. Kapsel nach Anspruch 1, wobei die Aufgussflüssigkeit in dem oberen Abschnitt in einem wasserdichten Beutel [Fig8(80)] enthalten ist, der aus recyclingfähigem oder biologisch abbaubarem Material hergestellt ist, und der mit dem auf der unteren Seite angeordneten mechanischen Rückhalteventil mit geplantem Bruch in Verbindung steht.

4. Kapsel nach Anspruch 1, ausgestattet mit einer RFID-Kommunikationsschnittstelle.

5. Kapsel nach Anspruch 1, ausgestattet mit einem QRCODE.

6. Kapsel nach Anspruch 1, wobei der die Aufgussflüssigkeit enthaltende Abschnitt und die mechanischen Rückhalteventile aus recyclingfähigem Material hergestellt sind.

7. Kapsel nach Anspruch 1, wobei der die Aufgussmischung enthaltende Abschnitt, die Diffusorfilter und die Ausgusstülle aus biologisch abbaubaren Materialien hergestellt sind.

8. Ausgabemaschine für die Kapsel nach Anspruch 1, bestehend aus einem Energieversorgungsteil [Fig7(71)], einer logischen Steuerung mit Management- und Kommunikationssoftware [Fig7(72)], einem Mikrowellenheizsystem und/oder einer elektrischen Heizung und/oder einem magnetischen Induktionserwärmer [Fig7(74)], einer Luftpumpe [Fig7(73)], die mit einer Durchstechdüse [Fig7(77)] ausgestattet ist, einem QRCODE-Leser und/oder RFID-Kommunikationssystem [Fig7(76)], einer Anzeige mit berührungsempfindlicher Befehlseingabefunktion [Fig7(79)] und einem Netzwerk-Kommunikationssystem, auch drahtloser Art [Fig7(78)];
und wobei die Ausgabemaschine einen Sitz umfasst, der speziell dafür gestaltet ist, dass das obere mechanische Rückhalteventil der Kapsel [Fig2(21)] mit der auf der Luftpumpe angeordneten durchstechenden Einspritzdüse [Fig7(77)] ausgerichtet ist.

9. Ausgabemaschine nach Anspruch 8, ausgestattet mit einer Software, die in der Lage ist, die im QRCODE und/oder in dem RFID-Chip der Kapsel gespeicherten Parameter zu lesen und zu verwalten.

10. Ausgabemaschine nach Anspruch 8, wobei die von dem QRCODE und/oder dem RFID-Chip gelesenen Daten bezüglich der empfohlenen Temperatur der Aufgussflüssigkeit und der Aufgussgeschwindigkeit von der benutzenden Person bearbeitet werden können.

11. Ausgabemaschine nach Anspruch 8, wobei die Durchstechdüse aus zwei leeren und konzentrischen zylindrischen Elementen, mit luftdichten Eigenschaften, bestehen, die entlang der entsprechenden Achse [Fig10(111)] bewegbar sind, die an zwei mechanischen Rückhaltefedern [Fig10(112)] festgelegt sind, mit einer inneren Luftstromöffnung mit verringertem Querschnitt [Fig10(113)] versehen sind, wobei das innere zylindrische Element mit einer Durchstechspitze [Fig10(114)] ausgestattet ist.

## Revendications

1. Capsule pour l'infusion de boissons pour machines de distribution, composée d'un boîtier étanche divisé en une ou plusieurs sections supérieures contenant un liquide [Fig1 (10)], une ou plusieurs sections inférieures contenant un mélange pour infusion [Fig1 (12)] et un bec verseur placé dans la base de la section inférieure contenant le mélange pour infusion [Fig1 (19)],
dans laquelle :
- la section contenant le liquide et la section contenant le mélange pour infusion sont jointes l'une à l'autre par un raccord mécanique étanche [Fig4] ou soudure aux ultrasons ;
- la section contenant le liquide est dotée d'un clapet obturateur mécanique à rupture programmée placé sur le côté inférieur [Fig1 (17)], raccordé avec la section contenant le mélange pour infusion ;
- la section contenant le mélange pour infusion est dotée d'un filtre diffuseur placé sur le côté supérieur [Fig1 (15)] communiquant avec la section contenant le liquide pour infusion, d'un filtre diffuseur placé sur le côté inférieur [Fig1 (16)] et d'un clapet obturateur mécanique inférieur à rupture programmée [Fig1 (100)] communiquant avec le bec verseur ;
- **caractérisée en ce que** :
la section contenant le liquide est dotée d'un clapet obturateur mécanique placé sur le côté supérieur [Fig1 (18)] ; le clapet obturateur mécanique à rupture programmée placé sur la section du mélange pour infusion [Fig1 (100)] a un seuil d'ouverture supérieur au seuil du clapet obturateur mécanique à rupture programmée placé dans la section supérieure contenant le liquide pour infusion [Fig1 (17)].

2. Capsule selon la revendication 1, dans laquelle la jonction mécanique entre la section contenant le liquide pour infusion et la section contenant le mélange pour infusion est obtenue par un raccord à vis.

3. Capsule selon la revendication 1, dans laquelle le liquide pour infusion dans la section supérieure est contenu dans un sachet étanche [Fig8 (80)], réalisé dans un matériau recyclable ou biodégradable, communiquant avec le clapet obturateur mécanique à rupture programmée placé sur le côté inférieur.

4. Capsule selon la revendication 1, dotée d'une interface de communication RFID.

5. Capsule selon la revendication 1, dotée d'un code QR.

6. Capsule selon la revendication 1, dans laquelle la section contenant le liquide pour infusion et les clapets obturateurs mécaniques sont réalisés dans un matériau recyclable.

7. Capsule selon la revendication 1, dans laquelle la section contenant le mélange pour infusion, les filtres diffuseurs et le bec verseur sont réalisés dans des matériaux biodégradables.

8. Machine de distribution pour la capsule de la revendication 1, constituée d'une section d'alimentation électrique [Fig7 (71)], d'une commande logique avec un logiciel de gestion et de communication [Fig7 (72)], d'un système de chauffage à micro-ondes et/ou réchauffeur électrique et/ou réchauffeur à induction magnétique [Fig7 (74)], d'une pompe à air [Fig7 (73)] équipée d'une buse de perforation [Fig7 (77)], d'un lecteur de code QR et/ou système de communication RFID [Fig7 (76)], d'un afficheur à saisie de commande tactile [Fig7 (79)], d'un système de communication réseau, également de type sans fil [Fig7 (78)] ;
et la machine de distribution comprend un siège spécialement conçu pour que le clapet obturateur mécanique supérieur de la capsule [Fig2 (21)] soit aligné avec le jet de la buse de perforation [Fig7 (77)] placée sur la pompe à air.

9. Machine de distribution selon la revendication 8, équipée d'un logiciel pour lire et gérer les paramètres enregistrés dans le code QR et/ou dans la puce RFID de la capsule.

10. Machine de distribution selon la revendication 8, dans laquelle les données lues du code QR et/ou de la puce RFID concernant la température recommandée du liquide pour infusion et la vitesse d'infusion sont modifiables par l'utilisateur.

11. Machine de distribution selon la revendication 8, dans laquelle la buse de perforation est constituée de deux éléments cylindriques vides et concentriques, avec caractéristique d'étanchéité à l'air, mobiles le long de leur axe respectif [Fig10 (111)], contraints à deux ressorts de retenue mécaniques [Fig10 (112)], dotés d'une ouverture intérieure à section réduite pour le flux d'air [Fig10 (113)], où l'élément cylindrique intérieur est doté d'une pointe de perforation [Fig10 (114)].
